# EUROPÄISCHE PATENTSCHRIFT

(11) **EP 1 293 329 B1**
(45) Veröffentlichungstag und Bekanntmachung des Hinweises auf die Patenterteilung: **28.04.2004**
(21) Anmeldenummer: 02018324.0
(22) Anmeldetag: 14.08.2002
(51) Int. Cl.: B29C 49/12, B29C 49/42

(54) **Vorrichtung zur Blasformung von Behältern**
Device for blow-molding containers
Dispositif pour mouler des récipients par soufflage

(30) Priorität: 15.09.2001 DE 10145579
(43) Veröffentlichungstag der Anmeldung: 19.03.2003
(73) Patentinhaber: SIG Corpoplast GmbH & Co. KG, 22145 Hamburg (DE)
(72) Erfinder: Baumgarte, Rolf, 22145 Hamburg (DE)
(74) Vertreter: Klickow, Hans-Henning, Dr.-Ing.

(56) Entgegenhaltungen:
- WO-A-01/02157
- DE-A- 19 948 474
- FR-A- 2 798 093
- US-A- 5 169 705

## Beschreibung

Die Erfindung betrifft eine Vorrichtung, wie bereits in der DE-OS 19 948 474 beschrieben, zur Blasformung von Behältern, die mindestens eine Blasform aufweist, die im Bereich einer Blasstation angeordnet ist und die mit mindestens einer Reckstange versehen ist, die von einem Reckstangenträger positionierbar ist, der mit einer Kurvensteuerung gekoppelt ist und der aus einem die Reckstange halternden Trägersockel und aus einem in die Kurvensteuerung eingreifenden Rollenträger ausgebildet ist, die von einem Kupplungselement miteinander verbunden sind.

Das Kupplungselement kann beispielsweise derart realisiert werden, daß ein pneumatischer Zylinder verwendet wird. Nach einer Druckbeaufschlagung des pneumatischen Zylinders wirkt dieser wie eine pneumatische Feder und verhindert bei einer Blockierung im Bereich der Reckstange mechanische Schäden im Bereich der Kurvensteuerung.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Nachteilig bei der Verwendung pneumatischer Zylinder der einleitend genannten Art als Federelement ist jedoch, daß nur ein begrenzter Hub vorliegt und daß nach erreichen des maximalen Hubweges wieder eine starre mechanische Kopplung zwischen dem Rollenträger und dem Trägersockel vorliegt. Diese nach Ausschöpfung des maximalen Hubweges eintretende mechanische Kopplung kann zu plötzlichen Beschleunigungen führen, die ungünstige mechanische Belastungen zur Folge haben.

Eine Vergrößerung des Hubes des pneumatischen Zylinders ist nur relativ begrenzt möglich, da hierdurch insbesondere im Bereich von rotierenden Blasrädern eine ungünstige Vergrößerung der zu bewegenden Massen hervorgerufen wird und zusätzliche Anforderungen an eine Kompaktheit der Vorrichtung nicht mehr erfüllt werden können.

Aufgabe der vorliegenden Erfindung ist es, eine Vorrichtung der einleitend genannten Art derart zu konstruieren, daß die Gefahr von mechanischen Beschädigungen bei einem Auftreten von Störungen weiter vermindert wird.

Diese Aufgabe wird erfindungsgemäß dadurch gelöst, daß das Kupplungselement als eine ausrastbare Kupplung ausgebildet ist.

Durch die Konstruktion des Kupplungselementes als ausrastbare Kupplung ist es möglich, sowohl eine sehr kompakte Realisierung mit geringen Massen vorzunehmen, als auch eine vollständige Entkopplung ohne Begrenzung des Kopplungsweges zu realisieren. Die Verwendung von ausrastbaren Kupplungen erweist sich insbesondere auch dann als vorteilhaft, wenn auf den Vorrichtungen zur Blasformung von Behältern sequentiell nacheinander unterschiedliche Produkte hergestellt werden, die jeweils die Verwendung unterschiedlicher Blasformen sowie die Realisierung unterschiedlicher Hubwege für die Reckstange erforderlich machen. Aufgrund der Ausrastbarkeit des Kupplungselementes ist unabhängig vom jeweiligen konkreten Hubweg der Reckstange eine volle Funktionsfähigkeit gegeben, ohne daß Anpassungsarbeiten durchgeführt werden müßten.

Zur Unterstützung einer Auskupplung bei plötzlich einwirkenden zu großen mechanischen Belastungen wird vorgeschlagen, daß das Kupplungselement als eine Überlastkupplung ausgebildet ist.

Eine gezielte Auskupplung in Abhängigkeit von Steuervorgaben kann dadurch erreicht werden, daß die Kupplung als eine schaltbare Kupplung ausgebildet ist.

Eine hohe Funktionsflexibilität kann dadurch erreicht werden, daß das Kupplungselement sowohl ein Überlastelement als auch eine Schalteinrichtung aufweist.

Eine konstruktive Vorgabe eines ungekoppelten Zustandes als Grundzustand kann dadurch erfolgen, daß das Kupplungselement einen Kupplungssockel sowie ein Kupplungsteil aufweist, die bei Aufbringung einer Kupplungsenergie miteinander verbunden sind.

Eine einfach zu steuernde Ausführungsform wird dadurch bereitgestellt, daß das Kupplungselement pneumatisch gesteuert ausgebildet ist.

Eine weitere Ausführungsvariante besteht darin, daß das Kupplungselement elektrisch gesteuert ausgebildet ist.

Zur Vorgabe exakt definierter Bewegungsbahnen wird vorgeschlagen, daß der Reckstangenträger und der Rollenträger entlang eines Gestänges geführt sind.

Zur Ausnutzung der Schwerkraft für die Erreichung eines ungekoppelten Zustandes wird vorgeschlagen, daß entlang des Gestänges der Rollenträger der Blasform zugewandt und der Trägersockel der Blasform abgewandt angeordnet ist. Grundsätzlich ist aber auch eine umgekehrte Anordnung realisierbar.

Eine kompakte Konstruktion, die eine formschlüssige Einkupplung ermöglicht, wird dadurch bereitgestellt, daß der Kupplungssockel mit einem Kupplungszapfen versehen ist, der eine Nut aufweist, die zur Aufnahme von Arretierungselementen ausgebildet ist, die im Bereich des Kupplungsteiles positionsveränderlich gelagert sind.

Zur Erleichterung eines Einkuppelns sowie eines Entkuppelns wird vorgeschlagen, daß die Nut schräg zu einer Kupplungslängsachse angeordnete Flanken aufweist.

Eine Positionierung von querverschieblichen Arretierungselementen wird dadurch unterstützt, daß zur Positionierung der Arretierungselemente im Bereich des Kupplungsteiles ein Positionierkolben angeordnet ist.

Bei der Realisierung einer pneumatischen Steuerbarkeit erweist es sich insbesondere als zweckmäßig, daß der Positionierkolben eine Kolbenfläche zur Druckbeaufschlagung aufweist.

Zur Unterstützung der konstruktiven Realisierung einer Überlastfunktion wird vorgeschlagen, daß sich der Positionierkolben über eine Druckfeder an einem Zentralelement des Kupplungsteiles abstützt.

Ebenfalls wird eine einfache Auskoppelbarkeit der Kupplung dadurch unterstützt, daß die Druckfeder einen Federweg aufweist, der mindestens einem Bewegungsweg des Positionierkolbens zur Freigabe der Arretierungselemente entspricht.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der der Reckstangenträger sowie der Rollenträger über eine ausrastbare Kupplung miteinander gekoppelt sind,
- Fig. 6: die Vorrichtung gemäß Fig. 5 nach einem Ausrasten der Kupplung und einer Trennung des Rollenträgers vom Reckstangenträger und
- Fig. 7: eine vergrößerte Darstellung der Einzelheit VII in Fig. 5.

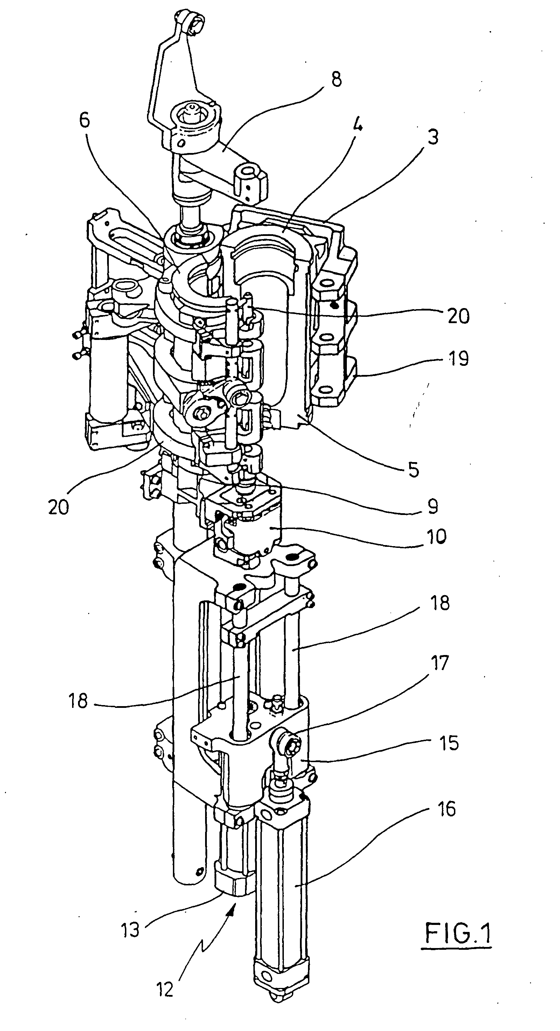

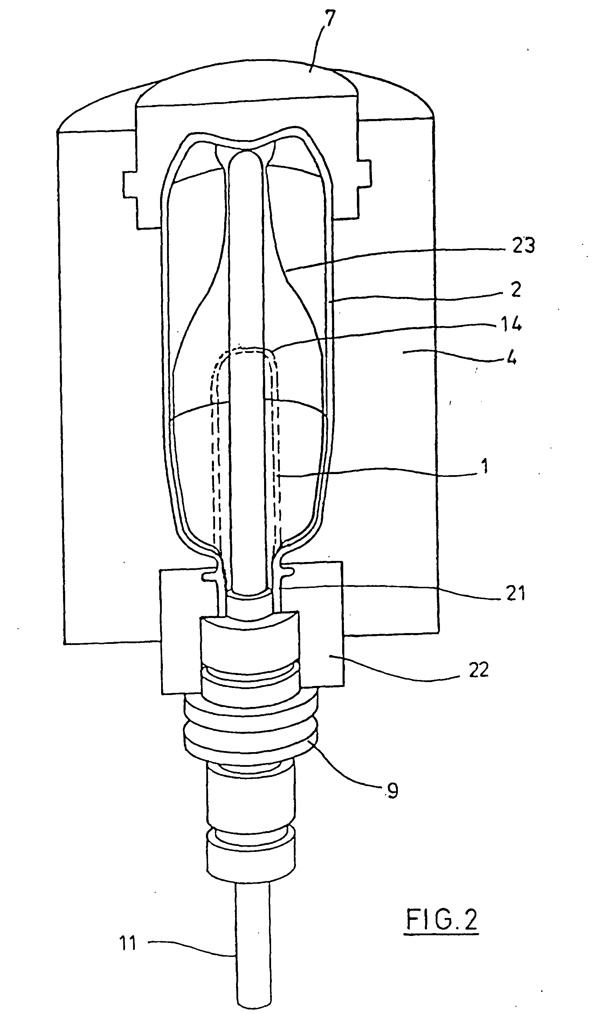

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

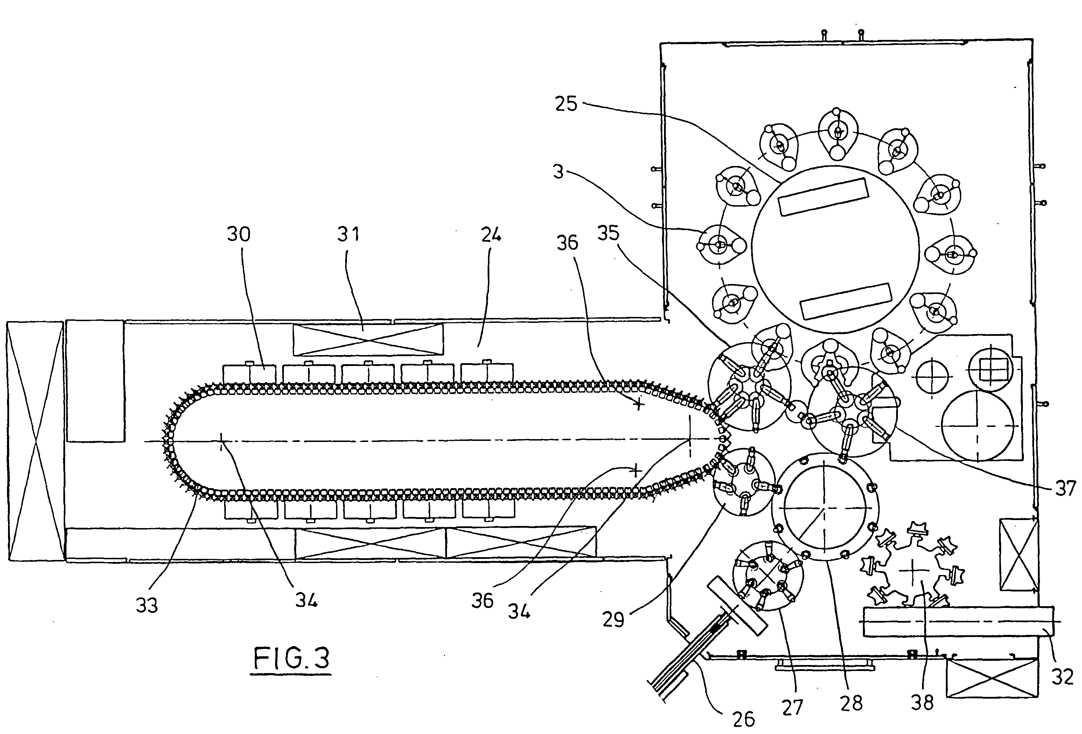

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

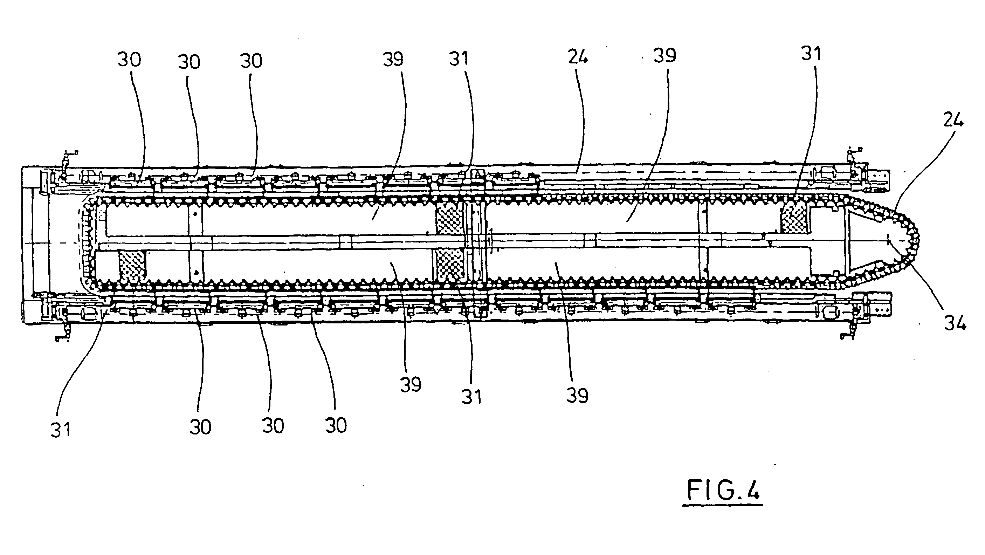

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

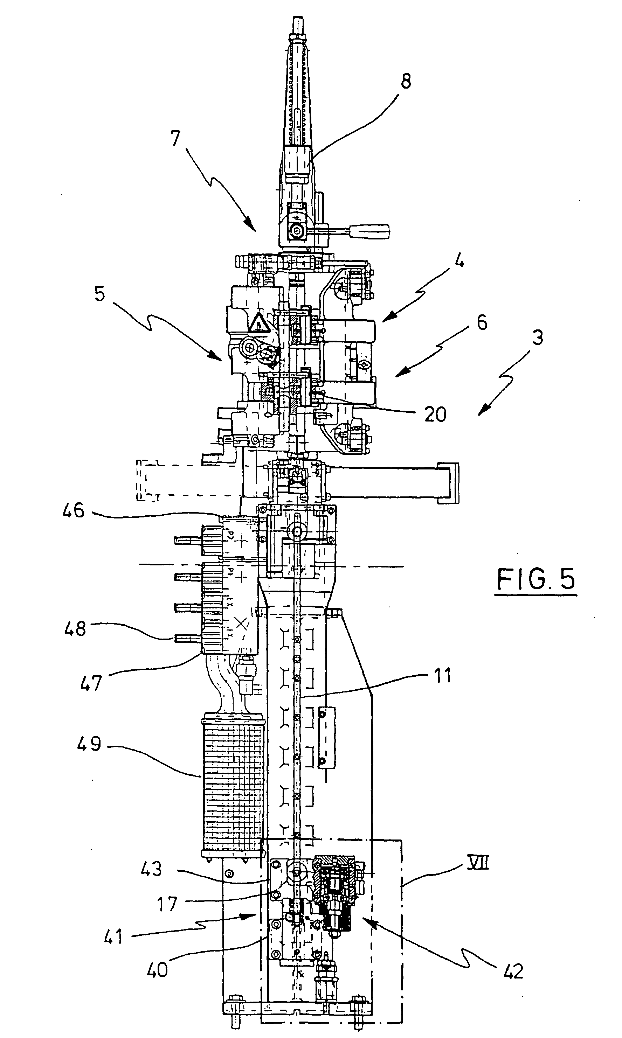

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.
Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden. Die Verwendung des nachfolgend näher beschriebenen Kupplungselementes (42) ist somit nicht von einem Einsatz bei einer vollständigen mechanischen Steuerung des Reckvorganges beschränkt, sondern kann insbesondere auch bei gemischten mechanischen und pneumatischen Steuerungen eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

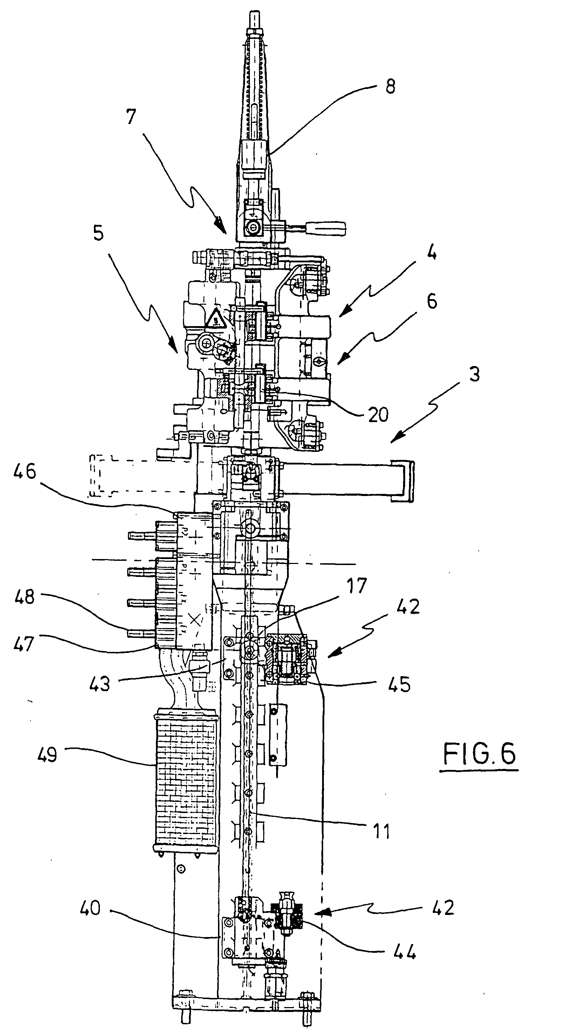

Gemäß dem in Fig. 6 dargestellten Betriebszustand ist das Kupplungselement (42) ausgerastet und der Trägersockel (40) ist vom Rollenträger (43) getrennt. In diesem ausgerasteten Zustand kann der Rollenträger (43) von der Führungsrolle (17) beliebig positioniert werden, ohne daß dies auch eine Bewegung der Reckstange (11) hervorruft. Bei der Auftrennung des Kupplungselementes (42) bleibt ein Kupplungssockel (44) fest mit dem Trägersockel (40) verbunden und ein Kupplungsteil (45) bewegt sich synchron mit dem Rollenträger (43).

Fig. 5 und Fig. 6 zeigen ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

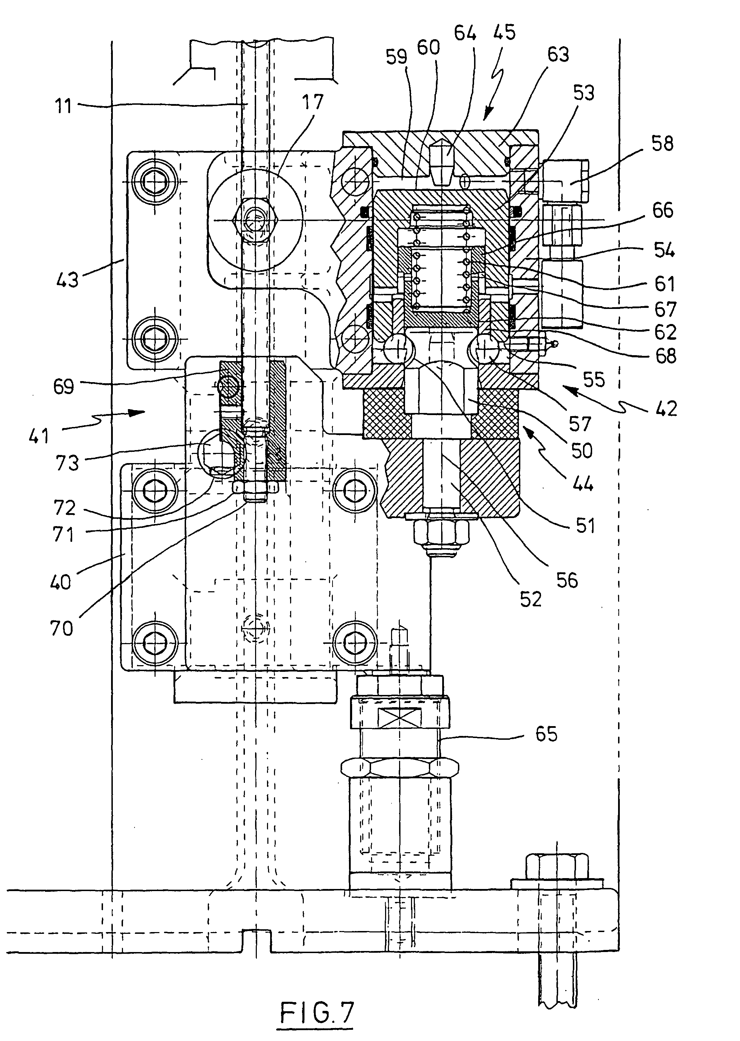

Fig. 7 zeigt eine stark vergrößerte Querschnittdarstellung des Kupplungselementes (42) in einem zusammengefügten Zustand des Kupplungssockels (44) und des Kupplungsteiles (45). Der Kupplungssockel (44) weist einen Kupplungszapfen (50) auf, der mit einer umlaufenden Nut (51) versehen ist. Insbesondere ist daran gedacht, die Nut (51) mit einer gerundeten Kontur zu versehen. Eine Befestigung des Kupplungssockels (44) im Bereich des Trägersockels (40) kann über einen Bolzen (52) realisiert sein.

Das Kupplungsteil (45) ist mit einem Positionierkolben (53) versehen, der bei der dargestellten Ausführungsform eine haubenartige Gestaltung aufweist und innerhalb eines Zylinders (54) geführt ist. Der Positionierkolben (53) weist im Bereich seiner der Nut (51) zugewandten Ausdehnung eine gerundete Begrenzung (55) auf, die bei einer Verstellung des Positionierkolbens (53) in Richtung einer Kupplungslängsachse (56) Arretierungselemente (57) beaufschlagt. Die Arretierungselemente (57) können beispielsweise kugelartig ausgeführt sein und werden von der Begrenzung (55) in einem arretierten Zustand in die Nut (51) hineingedrückt. Hierdurch liegt ein Formschluß zwischen dem Kupplungsteil (45) und dem Kupplungssockel (44) vor.

Eine verstellung des Positionierkolbens (53) kann mit Hilfe von Druckluft erfolgen, die über einen Druckluftanschluß (58) in einen Zylinderinnenraum (59) des Zylinders (54) eingeleitet wird und hier eine Kolbenfläche (60) des Positionierkolbens (53) beaufschlagt. Innerhalb des Positionierkolbens (53) ist eine Druckfeder (61) angeordnet, die sich einerseits am Positionierkolben (53) und andererseits an einem innerhalb des Positionierkolbens (53) geführten Zentralelement (62) abstützt.

Zur Vermeidung eines mechanischen Kontaktes zwischen der Kolbenfläche (60) und einer Abschlußplatte (63) des Zylinders (54) ist im Bereich der Abschlußplatte (63) ein Anschlagdämpfer (64) angeordnet, der beispielsweise aus Kunststoff ausgebildet sein kann. Für den Reckstangenträger (41) ist ein Anschlag (65) vorgesehen, der ebenfalls mit einem Anschlagdämpfer versehen sein kann.

Zur Lösung des in Fig. 7 dargestellten eingekuppelten Zustandes des Kupplungsteiles (45) sind grundsätzlich zwei Möglichkeiten vorgesehen. Eine Möglichkeit besteht hierbei in der gesteuerten Trennung des Kupplungsteiles (45) vom Kupplungssockel (44). Hierzu wird über den Druckluftanschluß (58) im Bereich des Zylinderinnenraumes (59) der pneumatische Druck vermindert, so daß die Druckfeder (61) zunächst den Positionierkolben (53) in Richtung auf die Abschlußplatte (63) verschiebt. Durch diese Verschiebung des Positionierkolbens (53) gibt die gerundete Begrenzung (55) des Positionierkolbens (53) die Arretierungselemente (57) frei, so daß diese quer zur Kupplungslängsachse (56) beweglich sind.

Eine Trennung des Kupplungsteiles (45) vom Kupplungssockel (44) kann dadurch unterstützt werden, daß ein Hubweg der Druckfeder (61) derart groß bemessen wird, daß auch nach einem Anschlag des Positionierkolbens (53) am Anschlagdämpfer (64) noch ein weiterer Federweg bereitsteht. Bei einer geeigneten in Richtung der Kupplungslängsachse (56) verschieblichen Anordnung des Zentralelementes (62) innerhalb des Kupplungsteiles (45) kann hierdurch eine auf den Kupplungszapfen (50) übertragene Kraft erzeugt werden, die das Kupplungsteil (45) vom Kupplungssockel (44) wegdrückt. Eine Trennung wird einerseits aber auch von der Schwerkraft unterstützt, ebenfalls ist es möglich, zusätzliche Federelemente zu installieren, die eine Abdrückkraft bereitstellen.

Die Überlastfunktion des Kupplungselementes (42) wird ebenfalls unter Verwendung der Beweglichkeit des Positionierkolbens (53) realisiert. Bei einer ausreichend großen Zugkraft zwischen dem Kupplungssockel (44) und dem Kupplungsteil (45) drückt der Kupplungssockel (44) mit der Schrägflanke der Nut (51) die Arretierungselemente (57) nach außen und der Positionierkolben (53) wird entgegen einer im Bereich des Zylinderinnenraumes (59) anstehenden Druckkraft in Richtung auf die Abschlußplatte (63) verschoben. Nach der Durchführung dieser Verschiebungsbewegung kann der Kupplungszapfen (50) aus dem Kupplungsteil (45) herausgezogen werden.

Fig. 7 veranschaulicht, daß das Zentralelement (62) im Bereich seiner dem Kupplungssockel (64) abgewandten Ausdehnung mit einem Kragen (66) versehen ist, der einen bezüglich der Kupplungslängsachse (56) nach außen überstehenden Absatz (67) bereitstellt. Nach einer Trennung des Kupplungsteiles (45) vom Kupplungssockel (44) wird das Zentralelement (62) aufgrund der Einwirkung der Kraft der Druckfeder (61) hierdurch mit dem Absatz (67) gegen eine Innenhülse (68) des Kupplungsteiles (45) gedrückt. Nach einer entsprechenden Trennung des Kupplungsteiles (45) vom Kupplungssockel (44) ist der Kontakt zwischen dem Kupplungszapfen (50) und dem Zentralelement (42) aufgehoben, so daß eine Längsverschiebung durchgeführt werden kann. Nach einer Anlage des Absatzes (67) an der Innenhülse (68) fixiert das Zentralelement (62) die Arretierungselemente (57) in der radial nach außen verschobenen entriegelten Positionierung. Erst bei einem erneuten Zusammenfügen des Kupplungsteiles (45) und des Kupplungssockels (44) wird das Zentralelement (62) wieder vom Kupplungszapfen (54) in das Kupplungsteil (45) hineingedrückt und die Arretierungselemente (57) werden wieder freigegeben.

Fig. 7 veranschaulicht ebenfalls, daß die Reckstange (11) im Bereich des Trägersockels (40) von einem Aufnahmeelement (69) gehaltert ist, das seinerseits im Bereich des Trägersockels (40) fixiert ist. Eine Halterung der Reckstange (11) relativ zum Aufnahmeelement (69) kann mit Hilfe eines als Verlängerung der Reckstange (11) angeordneten Gewindezapfens (70) erfolgen, der mit einer Kontermutter (71) zusammenwirkt, die die Reckstange (11) relativ zum Aufnahmeelement (69) verspannt.

Das Aufnahmeelement (69) ist in den Trägersockel (40) eingeschoben und wird durch einen Sicherungsstift (72) gegenüber einem Herausziehen aus dem Trägersockel (40) gesichert. Der Sicherungsstift (72) hintergreift im dargestellten Ausführungsbeispiel einen Bolzen (73).

Bei einem Auftreten einer mechanischen Überlast zwischen der Reckstange (11) und dem Trägersockel (40) bricht der Sicherungsstift (72) und das Aufnahmeelement (69) kann gemeinsam mit der Reckstange (11) aus dem Trägersockel (40) herausgezogen werden. Auch die Kombination des Sicherungsstiftes (72) mit dem im vorliegenden Fall als Bolzen (73) ausgebildeten Gegenelement stellt die Funktion einer ausrastbaren Kupplung bereit, die durch die auftretende mechanische Beschädigung allerdings nicht ohne Auswechselung des Sicherungsstiftes (72) wieder zusammenfügbar ist.

## Patentansprüche

1. Vorrichtung zur Blasformung von Behältern (2), die mindestens eine Blasform (4) aufweist, die im Bereich einer Blasstation (3) angeordnet ist und die mit mindestens einer Reckstange (11) versehen ist, die von einem Reckstangenträger (41) positionierbar ist, der mit einer Kurvensteuerung gekoppelt ist und der aus einem die Reckstange (11) halternden Trägersockel (40) und aus einem in die Kurvensteuerung eingreifenden Rollenträger (43) ausgebildet ist, die von einem Kupplungselement (42) miteinander verbunden sind, **dadurch gekennzeichnet, daß** das Kupplungselement (42) als eine ausrastbare Kupplung ausgebildet ist.

2. Vorrichtung nach Anspruch 1, **dadurch gekennzeichnet, daß** das Kupplungselement (42) als eine Überlastkupplung ausgebildet ist.

3. Vorrichtung nach Anspruch 1, **dadurch gekennzeichnet, daß** die Kupplung als eine schaltbare Kupplung ausgebildet ist.

4. Vorrichtung nach einem der Ansprüche 1 bis 3, **dadurch gekennzeichnet, daß** das Kupplungselement (42) sowohl ein Überlastelement als auch eine Schalteinrichtung aufweist.

5. Vorrichtung nach einem der Ansprüche 1 bis 4, **dadurch gekennzeichnet, daß** das Kupplungselement (42) eine Kupplungssockel (44) sowie ein Kupplungsteil (45) aufweist, die bei Aufbringung einer Kupplungsenergie miteinander verbunden sind.

6. Vorrichtung nach einem der Ansprüche 1 bis 5, **dadurch gekennzeichnet, daß** das Kupplungselement (42) pneumatisch gesteuert ausgebildet ist.

7. , Vorrichtung nach einem der Ansprüche 1 bis 5, **dadurch gekennzeichnet, daß** das Kupplungselement (42) elektrisch gesteuert ausgebildet ist.

8. Vorrichtung nach einem der Ansprüche 1 bis 5, **dadurch gekennzeichnet, daß** das Kupplungselement (42) hydraulisch gesteuert ausgebildet ist.

9. Vorrichtung nach einem der Ansprüche 1 bis 8, **dadurch gekennzeichnet, daß** der Trägersockel (40) und der Rollenträger (43) entlang eines Gestänges geführt sind.

10. Vorrichtung nach einem der Ansprüche 1 bis 9, **dadurch gekennzeichnet, daß** entlang des Gestänges der Rollenträger (43) der Blasform (4) zugewandt und der Trägersockel (40) der Blasform (4) abgewandt angeordnet ist.

11. Vorrichtung nach einem der Ansprüche 1 bis 10, **dadurch gekennzeichnet, daß** das Kupplungselement (42) einen Kupplungssockel (44) und ein Kupplungsteil (45) aufweist und daß der Kupplungssockel (44) mit einem Kupplungszapfen (50) versehen ist, der eine Nut (51) aufweist, die zur Aufnahme von Arretierungselementen (57) ausgebildet ist, die im Bereich des Kupplungsteiles (45) positionsveränderlich gelagert sind.

12. Vorrichtung nach dem Anspruch 11, **dadurch gekennzeichnet, daß** die Nut (51) schräg zu einer Kupplungslängsachse (56) angeordnete Flanken aufweist.

13. Vorrichtung nach einem der Ansprüche 11 oder 12, **dadurch gekennzeichnet, daß** zur Positionierung der Arretierungselemente (57) im Bereich des Kupplungsteiles (45) ein Positionierkolben (53) angeordnet ist.

14. Vorrichtung nach Anspruch 13, **dadurch gekennzeichnet, daß** der Positionierkolben (53) eine Kolbenfläche (60) zur Druckbeaufschlagung aufweist.

15. Vorrichtung nach einem der Ansprüche 13 oder 14, **dadurch gekennzeichnet, daß** sich der Positionierkolben (53) über eine Druckfeder (61) an einem Zentralelement (62) des Kupplungsteiles (45) abstützt.

16. Vorrichtung nach Anspruch 15, **dadurch gekennzeichnet, daß** die Druckfeder (61) einen Federweg aufweist, der mindestens einem Bewegungsweg des Positionierkolbens (53) zur Freigabe der Arretierungselemente (57) entspricht.

17. Vorrichtung nach einem der Ansprüche 1 bis 16, **dadurch gekennzeichnet, daß** im Bereich des Trägersockels (40) ein bei Beaufschlagung mit einer Überlast mechanisch zerstörbares Kupplungselement angeordnet ist.

18. Vorrichtung nach Anspruch 17, **dadurch gekennzeichnet, daß** das mechanisch zerstörbare Kupplungselement als ein Sicherungsstift (72) ausgebildet ist.

## Claims

1. Apparatus for blow-moulding containers (2), having at least one blow mould (4), which is arranged in the region of a blowing station (3) and which is provided with at least one stretching rod (11), which can be positioned by a stretching-rod support (41), which is coupled to a cam control and which is formed from a support base (40) holding the stretching rod (11) and from a roller support (43) engaging in the cam control, the support base and roller support being connected to one another by a coupling element (42), **characterised in that** the coupling element (42) is designed as a disengageable coupling.

2. Apparatus according to Claim 1, **characterised in that** the coupling element (42) is designed as an overload coupling.

3. Apparatus according to Claim 1, **characterised in that** the coupling is designed as a clutch.

4. Apparatus according to one of Claims 1 to 3, **characterised in that** the coupling element (42) has both an overload element and a switching device.

5. Apparatus according to one of Claims 1 to 4, **characterised in that** the coupling element (42) has a coupling base (44) and a coupling part (45), which are connected to one another when coupling energy is applied.

6. Apparatus according to one of Claims 1 to 5, **characterised in that** the coupling element (42) is of pneumatically controlled design.

7. Apparatus according to one of Claims 1 to 5, **characterised in that** the coupling element (42) is of electrically controlled design.

8. Apparatus according to one of Claims 1 to 5, **characterised in that** the coupling element (42) is of hydraulically controlled design.

9. Apparatus according to one of Claims 1 to 8, **characterised in that** the support base (40) and the roller support (43) are guided along a rod assembly.

10. Apparatus according to one of Claims 1 to 9, **characterised in that**, along the rod assembly, the roller support (43) is arranged on the side facing the blow mould (4) and the support base (40) is arranged on the side facing away from the blow mould (4).

11. Apparatus according to one of Claims 1 to 10, **characterised in that** the coupling element (42) has a coupling base (44) and a coupling part (45) and **in that** the coupling base (44) is provided with a coupling peg (50) having a groove (51) designed to receive detent elements (57) which are mounted, such that their position can be altered, in the region of the coupling part (45).

12. Apparatus according to Claim 11, **characterised in that** the groove (51) has flanks arranged obliquely with respect to a longitudinal axis (56) of the coupling.

13. Apparatus according to one of Claims 11 and 12, **characterised in that** a positioning piston (53) is arranged in the region of the coupling part (45) for positioning the detent elements (57).

14. Apparatus according to Claim 13, **characterised in that** the positioning piston (53) has a piston surface (60) for subjecting to pressure.

15. Apparatus according to one of Claims 13 and 14, **characterised in that** the positioning piston (53) is supported on a central element (62) of the coupling part (45) via a compression spring (61).

16. Apparatus according to Claim 15, **characterised in that** the compression spring (61) has a spring travel which corresponds at least to a movement travel of the positioning piston (53) for releasing the detent elements (57).

17. Apparatus according to one of Claims 1 to 16, **characterised in that** a coupling element which is mechanically destructible when subjected to an overload is arranged in the region of the support base (40).

18. Apparatus according to Claim 17, **characterised in that** the mechanically destructible coupling element is designed as a securing pin (72).

## Revendications

1. Dispositif de moulage-soufflage de récipients (2), qui présente au moins un moule de soufflage (4) qui est disposé dans la région d'un poste de soufflage (3) et qui est doté d'au moins une barre d'étirage (11) qui peut être positionnée par un support (41) de barre d'étirage couplé à une commande par came et constitué d'un socle de support (40) qui porte la barre d'étirage (11) et d'un porte-galet (43) qui s'engage dans la commande par came, les supports étant reliés l'un à l'autre par un élément d'accouplement (42), **caractérisé en ce que** l'élément d'accouplement (42) est configuré comme un accouplement désencliquetable.

2. Dispositif selon la revendication 1, **caractérisé en ce que** l'élément d'accouplement (42) est configuré comme un accouplement à surcharge.

3. Dispositif selon la revendication 1, **caractérisé en ce que** l'accouplement est configuré comme un accouplement commutable.

4. Dispositif selon l'une des revendications 1 à 3, **caractérisé en ce que** l'élément d'accouplement (42) présente à la fois un élément de surcharge et un dispositif de commutation.

5. Dispositif selon l'une des revendications 1 à 4, **caractérisé en ce que** l'élément d'accouplement (42) présente un socle d'accouplement (44) ainsi qu'une pièce d'accouplement (45) qui sont mutuellement reliés par application d'une énergie d'accouplement.

6. Dispositif selon l'une des revendications 1 à 5, **caractérisé en ce que** l'élément d'accouplement (42) est configuré à commande pneumatique.

7. Dispositif selon l'une des revendications 1 à 5, **caractérisé en ce que** l'élément d'accouplement (42) est configuré à commande électrique.

8. Dispositif selon l'une des revendications 1 à 5, **caractérisé en ce que** l'élément d'accouplement (42) est configuré à commande hydraulique.

9. Dispositif selon l'une des revendications 1 à 8, **caractérisé en ce que** le socle de support (40) et le porte-galet (43) sont guidés le long d'une tringlerie.

10. Dispositif selon l'une des revendications 1 à 9 **caractérisé en ce que**, le long de la tringlerie, le porte-galet (43) est tourné vers le moule de soufflage (4) et le socle de support (40) n'est pas tourné vers le moule de soufflage (4).

11. Dispositif selon l'une des revendications 1 à 10, **caractérisé en ce que** l'élément d'accouplement (42) présente un socle d'accouplement (44) et une pièce d'accouplement (45), et **en ce que** le socle d'accouplement (44) est doté d'un tourillon d'accouplement (50) qui présente une rainure (51) configurée pour recevoir des éléments d'arrêt (57) qui sont montés de telle sorte que leur position dans la région de la pièce d'accouplement (45) puisse être modifiée.

12. Dispositif selon la revendication 11, **caractérisé en ce que** la rainure (51) présente des flancs disposés obliquement par rapport à un axe longitudinal (56) de l'accouplement.

13. Dispositif selon l'une des revendications 11 ou 12, **caractérisé en ce qu'**un piston de positionnement (53) qui sert à positionner les éléments d'arrêt (57), est disposé dans la région de la pièce d'accouplement (45).

14. Dispositif selon la revendication 13, **caractérisé en ce que** le piston de positionnement (53) présente une surface de piston (60) destinée à recevoir une poussée.

15. Dispositif selon l'une des revendications 13 ou 14, **caractérisé en ce que** le piston de positionnement (53) s'appuie par un ressort de poussée (61) sur un élément central (62) de la pièce d'accouplement (45).

16. Dispositif selon la revendication 15, **caractérisé en ce que** le ressort de poussée (61) présente un parcours élastique qui correspond au moins à un parcours de déplacement du piston de positionnement (53) pour libérer les éléments d'arrêt (57).

17. Dispositif selon l'une des revendications 1 à 16, **caractérisé en ce qu'**un élément d'accouplement qui peut être détruit mécaniquement lorsqu'il est sollicité par une surcharge, est disposé dans la région du socle de support (40).

18. Dispositif selon la revendication 17, **caractérisé en ce que** l'élément d'accouplement qui peut être détruit mécaniquement est configuré comme une cheville de sécurité (72).
